# EUROPÄISCHE PATENTSCHRIFT

(11) **EP 1 174 452 B1**
(45) Veröffentlichungstag und Bekanntmachung des Hinweises auf die Patenterteilung: **03.08.2005**
(21) Anmeldenummer: 01115061.2
(22) Anmeldetag: 21.06.2001
(51) Int. Cl.: C08G 18/40, C08G 18/48, C08G 18/66, C08G 18/73

(54) **Verfahren zur Herstellung von Polyurethan-Schaumstoffen unter Verwendung von Polyacrylatpolyolen**
Process for preparing polyurethane foams using polyacrylate polyols
Procede de fabrication de mousses de polyurethane avec utilisation des polyols d'acrylate

(30) Priorität: 19.07.2000 DE 10035400
(43) Veröffentlichungstag der Anmeldung: 23.01.2002
(73) Patentinhaber: BASF AKTIENGESELLSCHAFT, 67056 Ludwigshafen (DE)
(72) Erfinder: Bruchmann, Bernd, Dr., 67251 Freinsheim (DE); Binder, Horst, 68623 Lampertheim (DE); Lutter, Heinz-Dieter, Dr., 49356 Diepholz (DE); Hirn, Michael, 69207 Sandhausen (DE)

(56) Entgegenhaltungen:
- US-A- 3 314 901
- US-A- 4 542 166
- US-A- 4 732 960

## Beschreibung

Die Erfindung betrifft ein Verfahren zur Herstellung von lichtstabilen Polyurethan-Schaumstoffen geringer Raumgewichte durch Umsetzung von aliphatischen Polyisocyanaten mit Verbindungen mit mindestens zwei mit Isocyanatgruppen reaktiven Wasserstoffatomen.

Polyurethan-Schaumstoffe sind seit langem bekannt und vielfach in der Literatur beschrieben. Ihre Herstellung erfolgt üblicherweise durch Umsetzung von Isocyanaten mit Verbindungen mit mindestens zwei mit Isocyanatgruppen reaktiven Wasserstoffatomen. Als Isocyanate werden zumeist aromatische Di- und Polyisocyanate verwendet, wobei Isomere des Toluylendiisocyanats (TDI), Isomere des Diphenylmethandiisocyanats (MDI) sowie Mischungen aus Diphenylmethandiisocyanat und Polymethylen-polyphenylen-polyisocyanaten (Roh-MDI) die größte technische Bedeutung haben.

Derartige Polyurethan-Schaumstoffe auf der Basis von aromatischen Isocyanaten neigen jedoch unter Einwirkung von Licht zur Vergilbung. Diese Neigung zur Vergilbung ist für viele Anwendungsgebiete störend. Es ist bekannt, daß Polyurethane, zu deren Herstellung aliphatische Isocyanate eingesetzt werden, lichtstabil sind und praktisch keinerlei Vergilbung zeigen. Nachteilig bei der Verwendung von aliphatischen Isocyanaten zur Herstellung von Polyurethan-Schaumstoffen ist jedoch, daß die so hergestellten Schaumstoffe in vieler Hinsicht, insbesondere in ihren mechanischen Eigenschaften, solchen auf der Basis von aromatischen Isocyanaten zumeist deutlich unterlegen sind. Insbesondere auf Grund der unzureichenden Ausbildung von Hart- und Weichphasensegmenten im Schaum kommt es zu Einbußen in wesentlichen Materialeigenschaften, wie Dehnung, Zugfestigkeit und Flexibilität, daher haben aliphatische Polyurethanschaumstoffe bisher kaum technische Bedeutung.

WO 98/52987 beschreibt die Herstellung von lichtechten Polyurethan-Schaumstoffen unter Verwendung von aliphatischen Isocyanaten, wobei als Verbindung mit mindestens zwei mit Isocyanatgruppen reaktiven Wasserstoffatomen hydrierte Polydiendiole eingesetzt werden. Derartige Diole sind jedoch im Vergleich zu den üblicherweise verwendeten Alkoholen teurer. Außerdem zeigen diese Schaumstoffe unter Lichteinwirkung eine Verschlechterung ihrer mechanischen Eigenschaften und werden klebrig.

US-A-3,284,415 beschreibt die Herstellung von Polyurethanen, insbesondere zelligen und geschäumten Polyurethanen, durch Umsetzung von monomeren Diisocyanaten oder Polyisocyanaten mit Verbindungen mit mindestens zwei mit Isocyanatgruppen reaktiven Wasserstoffatomen, wobei als Verbindungen mit mindestens zwei mit Isocyanatgruppen reaktiven Wasserstoffatomen Copolymere aus Ethylen und 4 bis 35 Gew.-% Alkylacrylaten und/oder Hydroxyalkylacrylaten verwendet werden. Diese Ethylen-Acrylat-Copolymere werden als alleinige Polyolkomponente verwendet, als Diisocyanate werden insbesondere aromatische Di- und Polyisocyanate, wie Toluylendiisocyanat, Phenylendiisocyanat, Diphenylmethandiisocyanat oder Diphenylmethandiisocyanat-Oligomere eingesetzt. Durch die Verwendung der Polyethylenacrylate wurden die mechanischen Eigenschaften der Polyurethane, insbesondere die Elastizität und die Schlagfestigkeit bei tiefen Temperaturen, sowie die Wasserbeständigkeit der Polyurethane verbessert.

In DE-C-22 45 710 werden bei Raumtemperatur flüssige, ethylenisch ungesättigte Vinylchlorid-Copolymerisate beschrieben, die als Flammschutzmittel in Polyurethan-Hartschäumen eingesetzt werden können. Es wird jedoch kein Einfluß der Copolymerisate auf die mechanischen Eigenschaften der Schaumstoffe erwähnt.

Aufgabe der vorliegenden Erfindung war es, lichtstabile Polyurethan-Schaumstoffe bereitzustellen, die gute mechanische Eigenschaften, insbesondere Dehnung und Zugfestigkeit aufweisen, und die unter Verwendung von in der Polyurethanchemie üblichen Ausgangsstoffen hergestellt werden können.

Die Aufgabe konnte erfindungsgemäß gelöst werden, indem zur Herstellung der Polyurethan-Schaumstoffe aliphatische Polyisocyanate und Polyacrylatpolyole eingesetzt werden.

Gegenstand der Erfindung ist demzufolge ein Verfahren zur Herstellung von Polyurethan-Schaumstoffen durch Umsetzung von
a) Polyisocyanaten mit
b) Verbindungen mit mindestens zwei mit Isocyanatgruppen reaktiven Wasserstoffatomen, dadurch gekennzeichnet, daß die Polyisocyanate a) aliphatische Polyisocyanate sind und die Verbindungen mit mindestens zwei mit Isocyanatgruppen reaktiven Wasserstoffatomen b) mindestens ein Acrylatpolyol enthalten.

Gegenstand der Erfindung sind weiterhin Polyurethanschaumstoffe, herstellbar nach dem oben beschriebenen Verfahren.

Gegenstand der Erfindung sind weiterhin Polyolmischungen, enthaltend mindestens ein Acrylatpolyol und mindestens einen weiteren Alkohol, vorzugsweise einen mindestens difunktionellen Polyetheralkohol oder einen Polyesteralkohol.

Als Acrylatpolyole werden vorzugsweise niedermolekulare Acrylatpolyole eingesetzt, das heißt solche, deren zahlenmittleres Molekulargewicht maximal 12000 g/mol, vorzugsweise maximal 8000 g/mol, besonders bevorzugt maximal 6000 g/mol und minimal 400 g/mol beträgt. Im folgenden werden die Bezeichnungen "Acrylatpolyole" und "Polyacrylatpolyole" synonym verwendet.

Die erfindungsgemäß verwendeten Acrylatpolyole werden durch Polymerisation von hydroxyfunktionalisierten (Meth)acrylaten, bevorzugt durch Copolymerisation von hydroxyfunktionalisierten (Meth)acrylaten mit nicht hydroxylfunktionellen (Meth)acrylaten hergestellt. Weiterhin können sie auch durch Copolymerisation der genannten Acrylat-Monomeren mit anderen aliphatischen, ethylenisch ungesättigten Monomeren, wie zum Beispiel Ethen, Propen, Buten, Isobuten, Acrylnitril, Acrylamid, Acrolein, Vinylester von Carbonsäuren oder ungesättigten Carbonsäuren, wie zum Beispiel Maleinsäure, Fumarsäure oder Crotonsäure oder deren Derivaten, hergestellt werden.

Derartige Copolymerisationen können in kontinuierlich oder diskontinuierlich betriebenen Reaktoren, beispielsweise Kesseln, Ringspaltreaktoren, Taylorreaktoren, Extrudern oder Rohrreaktoren, durchgeführt werden.

Bevorzugt werden Reaktionsbedingungen gewählt, die zu Polymeren mit geringen Verunreinigungen führen. So wird bei der Herstellung der erfindungsgemäß verwendeten Acrylatpolyole vorzugsweise ohne die Verwendung von Polymerisationsreglern gearbeitet.

Vorzugsweise wird bei der Herstellung der erfindungsgemäß verwendeten Acrylatpolyole bei Temperaturen oberhalb 160°C in Abwesenheit von Polymerisationsreglern und mit möglichst geringen Initiatorkonzentrationen polymerisiert. Die Prozessführung wird vorzugsweise so gewählt, dass am Ende der Umsetzung Acrylatpolyole mit mittleren Molmassen (Mn) von maximal etwa 12000 g/mol vorliegen.

Bevorzugt geeignet sind Homopolymerisate aus Hydroxyalkyl-(meth)acrylaten oder Copolymerisate aus Hydroxyalkyl(meth)-acrylaten mit nicht OH-funktionellen (meth)acrylischen Monomeren. Insbesondere werden bei der Herstellung der erfindungsgemäß verwendeten Acrylatpolyole halogenfreie Monomere eingesetzt.

Die erfindungsgemäß verwendeten Acrylatpolyole werden insbesondere hergestellt durch Polymerisation von C₁- bis C₈-Hydroxyalkyl(meth)acrylaten, wie z.B. Hydroxyethyl(meth)-acrylat, Hydroxypropyl(meth)acrylat, Hydroxybutyl(meth)acrylat.

Als acrylische Monomere ohne OH-Gruppen, die gegebenenfalls als Comonomere eingesetzt werden können, kommen insbesondere aliphatische, olefinische Doppelbindungen enthaltende Monomere unterschiedlichster chemischer Struktur in Betracht, wie beispielsweise Alkene mit 2 bis 6 Kohlenstoffatomen, wie Ethen, Propen, Buten, Isobuten, Acrylnitril, Acrylamid, Acrolein, Vinylester von Carbonsäuren oder ungesättigte Carbonsäuren, wie zum Beispiel Maleinsäure, Fumarsäure oder Crotonsäure oder deren Derivate, und besonders bevorzugt Alkyl(meth)acrylate mit C₁- bis C₁₀-Alkylgruppen, beispielsweise n-Hexyl(meth)acrylat, Cyclohexyl(meth)-acrylat, n-Butyl(meth)acrylat, Propyl(meth)acrylat, Ethyl(meth)-acrylat, Methyl(meth)acrylat, Ethylhexyl(meth)acrylat und/oder Hexandioldi(meth)acrylat. Die genannten Monomere können einzeln oder in beliebigen Mischungen untereinander eingesetzt werden.

Die erfindungsgemäß verwendeten Acrylatpolyole werden vorzugsweise durch Copolymerisation von C₁- bis C₈-Hydroxyalkyl(meth)-acrylaten mit den oben beschriebenen nicht OH-funktionellen (meth)acrylischen Monomeren hergestellt, wobei die Kombination unterschiedlicher Hydroxyalkyl(meth)acrylate mit den nichtfunktionellen (Meth)acrylaten beliebig möglich ist. Vorzugsweise werden die OH-Gruppen enthaltenden Monomere in Konzentrationen von 5 bis 95 mol.-%, besonders bevorzugt von 10 bis 80 mol.-% eingesetzt.

Die zahlenmittleren Molmassen (Mn) der erfindungsgemäß verwendeten Acrylatpolyole liegen besonders bevorzugt bei maximal 6000 g/mol, die mittleren OH-Funktionalitäten zwischen 2 und 20 und die OH-Zahlen zwischen 100 und 500 mg KOH/g. Bei höheren Molekulargewichten und höheren Funktionalitäten sind die Acrylatpolyole zu hochviskos oder fest und lassen sich daher nur schwer in Polyurethansystemen verarbeiten. Außerdem haben die so hergestellten Polyurethane auf Grund der sehr hohen Vernetzung unzureichende mechanische Eigenschaften.

Die Polyacrylatalkohole werden vorzugsweise in einer Menge von 0,1 bis 50, vorzugsweise 0,5 bis 40 und besonders bevorzugt von 1 bis 30 Gew. Teilen, bezogen auf 100 Gew.-Teile der Verbindungen mit mindestens zwei mit Isocyanatgruppen reaktiven Wasserstoffatomen b) zugesetzt.

Als Verbindungen mit mindestens zwei aktiven Wasserstoffatomen b), die zusammen mit den erfindungsgemäß verwendeten Acrylatpolyolen eingesetzt werden können, kommen insbesondere Polyesteralkohole und vorzugsweise Polyetheralkohole mit einer Funktionalität von 2 bis 8, insbesondere von 2 bis 6, vorzugsweise von 2 bis 4 und einem mittleren Molekulargewicht im Bereich von 400 bis 10000 g/mol, vorzugsweise 1000 bis 8000 g/mol, in Betracht.

Die Polyetheralkohole können nach bekannten Verfahren, zumeist durch katalytische Anlagerung von Alkylenoxiden, insbesondere Ethylenoxid und/oder Propylenoxid, an H-funktionelle Startsubstanzen, oder durch Kondensation von Tetrahydrofuran, hergestellt werden. Als H-funktionelle Startsubstanzen kommen insbesondere mehrfunktionelle Alkohole und/oder Amine zum Einsatz. Bevorzugt eingesetzt werden Wasser, zweiwertige Alkohole, beispielsweise Ethylenglykol, Propylenglykol, oder Butandiole, dreiwertige Alkohole, beispielsweise Glycerin oder Trimethylolpropan, sowie höherwertige Alkohole, wie Pentaerythrit, Zuckeralkohole, beispielsweise Sucrose, Glucose oder Sorbit. Bevorzugt eingesetzte Amine sind aliphatische Amine mit bis zu 10 Kohlenstoffatomen, beispielsweise Ethylendiamin, Diethylentriamin, Propylendiamin, sowie Aminoalkohole, wie Ethanolamin oder Diethanolamin. Als Alkylenoxide werden vorzugsweise Ethylenoxid und/oder Propylenoxid eingesetzt, wobei bei Polyetheralkoholen, die für die Herstellung von Polyurethan-Weichschäumen verwendet werden, häufig am Kettenende ein Ethylenoxidblock angelagert wird. Als Katalysatoren bei der Anlagerung der Alkylenoxide kommen insbesondere basische Verbindungen zum Einsatz, wobei hier das Kaliumhydroxid die größte technische Bedeutung hat. Wenn der Gehalt an ungesättigten Bestandteilen in den Polyetheralkoholen gering sein soll, können als Katalysatoren auch Multimetallcyanidverbindungen, sogenannte DMC-Katalysatoren, eingesetzt werden.

Für bestimmte Einsatzgebiete, insbesondere zur Erhöhung der Härte der Polyurethan-Weichschaumstoffe, können auch sogenannte polymermodifizierte Polyole verwendet werden. Derartige Polyole können beispielsweise durch in-situ Polymerisation von ethylenisch ungesättigten Monomeren, vorzugsweise Styrol und/oder Acrylnitril, in Polyetheralkoholen hergestellt werden. Zu den polymermodifizierten Polyetheralkoholen gehören auch Polyharnstoffdispersionen enthaltende Polyetheralkohole, die vorzugsweise durch Umsetzung von Aminen mit Isocyanaten in Polyolen hergestellt werden.

Zur Herstellung von Weichschäumen und Integralschäumen werden insbesondere zwei- und/oder dreifunktionelle Polyetheralkohole eingesetzt. Zur Herstellung von Hartschäumen werden insbesondere Polyetheralkohole eingesetzt, die durch Anlagerung von Alkylenoxiden an vier- oder höherfunktionelle Starter, wie Zuckeralkohole oder aromatische Amine hergestellt werden.

Bevorzugt werden zur Herstellung von Weichschaumstoffen nach dem erfindungsgemäßen Verfahren zwei- und/oder dreifunktionelle Polyetheralkohole eingesetzt, die primäre Hydroxylgruppen aufweisen, insbesondere solche mit einem Ethylenoxidblock am Kettenende oder solche, die nur auf Ethylenoxid basieren.

Zu den Verbindungen mit mindestens zwei aktiven Wasserstoffatomen gehören auch die Kettenverlängerungs- und Vernetzungsmittel, die gegebenenfalls mitverwendet werden können. Als Kettenverlängerungs- und Vernetzungsmittel werden vorzugsweise 2- und 3-funktionelle Alkohole mit Molekulargewichten unter 400 g/mol, insbesondere im Bereich von 60 bis 150 g/mol, verwendet. Beispiele sind Ethylenglykol, Propylenglykol, Diethylenglykol, Butandiol-1,4, Glycerin oder Trimethylolpropan. Als Vernetzungsmittel können auch Diamine eingesetzt werden. Falls Kettenverlängerungs- und Vernetzungsmittel eingesetzt werden, beträgt deren Menge vorzugsweise bis zu 5 Gew.-%, bezogen auf das Gewicht der Verbindungen mit mindestens zwei aktiven Wasserstoffatomen.

Als Polyisocyanate können die üblichen und bekannten (cyclo)-aliphatischen Di-, Tri- und Polyisocyanate eingesetzt werden. Beispiele für (cyclo)aliphatische Di- oder Tri-isocyanate sind Tetramethylendiisocyanat-1,4, Hexamethylendiisocyanat-1,6 (HDI), Isophorondiisocyanat (IPDI), 2-Methyl-pentamethylendiisocyanat, 2,2,4- oder 2,4,4-Trimethyl-1,6-hexamethylen-diisocyanat, 2-Butyl-2-ethyl-pentamethylendiisocyanat, 1,4-Diisocyanatocyclohexan, 3-Isocyanatomethyl-1-methyl-1-isocyanatocyclohexan, Isocyanatopropyl-cyclohexylisocyanat, Xylylendiisocyanat, Tetramethylxylylendiisocyanat, Bis-(4-isocyanatocyclohexyl)-methan, Lysinesterisocyanate, 1,3- oder 1,4-Bis(isocyanatomethyl)cyclohexan, 4-Isocyanatomethyl-1,8-octamethylendiisocyanat sowie deren Mischungen. Vorzugsweise werden Hexamethylendiisocyanat-1,6, Isophorondiisocyanat, Bis-(4-isocyanatocyclohexyl)methan oder Mischungen der Isocyanate eingesetzt.

Vorzugsweise werden gemeinsam mit oder an Stelle der monomeren Isocyanate daraus hergestellte Oligo- oder Polyisocyanate, insbesondere auf Basis von HDI und IPDI, eingesetzt. Diese Oligo- oder Polyisocyanate lassen sich aus den genannten Di- oder Triisocyanaten oder deren Mischungen durch Verknüpfung mittels Urethan-, Allophanat-, Harnstoff-, Biuret-, Uretdion-, Amid-, Isocyanurat-, Carbodiimid-, Uretonimin-, Oxadiazintrion- oder Iminooxadiazindion-Strukturen herstellen. Vorzugsweise werden hier Urethan-, Allophanat-, Uretdion-, Biuret- oder Isocyanuratgruppen aufweisende Polymere aus HDI oder IPDI verwendet, besonders bevorzugt ist die Verwendung von Allophanat-, Biuret- oder Isocyanuratgruppen aufweisenden Polymeren auf Basis von HDI.

Zur Durchführung des erfindungsgemäßen Verfahrens können weitere Einsatzstoffe, insbesondere Katalysatoren, Treibmittel sowie Hilfs- und/oder Zusatzstoffe mitverwendet werden, zu denen im einzelnen folgendes zu sagen ist:

Als Katalysatoren für die Herstellung der erfindungsgemäßen Polyurethan-Schaumstoffe werden die üblichen und bekannten Polyurethanbildungskatalysatoren eingesetzt, beispielsweise organische Zinnverbindungen, wie Zinndiacetat, Zinndioctoat, Dialkylzinndilaurat, und/oder stark basische Amine wie Triethylamin, Pentamethyldiethylentriamin, Tetramethyldiaminoethylether, Imidazole oder vorzugsweise Triethylendiamin. Die Katalysatoren werden vorzugsweise in einer Menge von 0,01 bis 5 Gew.-%, vorzugsweise 0,05 bis 2 Gew.-%, eingesetzt.

Als Treibmittel zur Herstellung der Polyurethan-Schaumstoffe wird bevorzugt Wasser eingesetzt, das mit den Isocyanatgruppen unter Freisetzung von Kohlendioxid reagiert. Gemeinsam mit oder an Stelle von Wasser können auch physikalisch wirkende Treibmittel, beispielsweise Kohlendioxid, Kohlenwasserstoffe, wie n-, iso- oder Cyclopentan, Cyclohexan oder halogenierte Kohlenwasserstoffe, wie Tetrafluorethan, Pentafluorpropan, Heptafluorpropan, Pentafluorbutan, Hexafluorbutan oder Dichlormonofluorethan, eingesetzt werden. Die Menge des physikalischen Treibmittels liegt dabei vorzugsweise im Bereich zwischen 1 bis 15 Gew.-%, insbesondere 1 bis 10 Gew.-%, die Menge an Wasser vorzugsweise im Bereich zwischen 0,5 bis 10 Gew.-%, insbesondere 1 bis 5 Gew.-%.

Als Hilfsmittel und/oder Zusatzstoffe werden beispielsweise oberflächenaktive Substanzen, Schaumstabilisatoren, Zellregler, äußere und innere Trennmittel, Füllstoffe, Flammschutzmittel, Pigmente, Hydrolyseschutzmittel sowie fungistatisch und bakteristatisch wirkende Substanzen eingesetzt.

Bei der technischen Herstellung von Polyurethan-Schaumstoffen ist es üblich, die Verbindungen mit mindestens zwei aktiven Wasserstoffatomen b) und die weiteren Einsatzstoffe sowie Hilfs- und/oder Zusatzstoffe vor der Umsetzung zu einer sogenannten Polyolkomponente zu vereinigen.

Weitere Angaben über die verwendeten Ausgangsstoffe finden sich beispielsweise im Kunststoffhandbuch, Band 7, Polyurethane, herausgegeben von Günter Oertel, Carl-Hanser-Verlag, München, 3. Auflage 1993.

Zur Herstellung der erfindungsgemäßen Polyurethane werden die organischen Polyisocyanate a) mit den Verbindungen mit mindestens zwei aktiven Wasserstoffatomen b) sowie die genannten Treibmittel, Katalysatoren und Hilfs- und/oder Zusatzstoffe (Polyolkomponente) zur Reaktion gebracht, wobei die erfindungsgemäß verwendeten Acrylatpolyole vorzugsweise der Polyolkomponente zugesetzt werden.

Bei der Herstellung der erfindungsgemäßen Polyurethane werden Isocyanat- und Polyolkomponente in einer solchen Menge zusammengebracht, daß das Äquivalenzverhältnis von Isocyanatgruppen zur Summe der aktiven Wasserstoffatome 0,6 : 1 bis 1 : 1,4, vorzugsweise 0,7 : 1 bis 1 : 1,20 beträgt.

Die Herstellung der Polyurethan-Schaumstoffe erfolgt vorzugsweise nach dem one-shot-Verfahren, beispielsweise mit Hilfe der Hochdruck- oder Niederdrucktechnik. Die Schaumstoffe können in offenen oder geschlossenen metallischen Formwerkzeugen oder durch das kontinuierliche Auftragen des Reaktionsgemisches auf Bandstraßen zur Erzeugung von Schaumblöcken hergestellt werden.

Besonders vorteilhaft ist es, nach dem sogenannten Zweikomponentenverfahren zu arbeiten, bei dem, wie oben ausgeführt, eine Polyol- und eine Isocyanatkomponente hergestellt und verschäumt werden. Die Komponenten werden vorzugsweise bei einer Temperatur im Bereich zwischen 15 bis 120°C, vorzugsweise 20 bis 80°C vermischt und in das Formwerkzeug beziehungsweise auf die Bandstraße gebracht. Die Temperatur im Formwerkzeug liegt zumeist im Bereich zwischen 15 und 120°C, vorzugsweise zwischen 30 und 80°C. Werden Acrylatpolyole mit einer Viskosität oberhalb 10000 mPas, gemessen bei 23°C, eingesetzt, ist es vorteilhaft, das Acrylat mit einer niederviskoseren OH-Komponente der Polyolmischung bei etwa 50°C vorzuverdünnen und erst dann der Polyolmischung zuzusetzen.

Die erfindungsgemäß eingesetzten Acrylatpolyole erlauben die Herstellung von elastischen und viskoelastischen Weichschaumstoffen mit niedrigen Raumgewichten und hervorragenden mechanischen Eigenschaften, z.B. einer sehr guten Flexibilität, Dehnung, Zugfestigkeit und einer hervorragenden Alterungsbeständigkeit (Druckverformungsrest nach Autoklav-Alterung).

Weiterhin können erfindungsgemäß ebenfalls Integralschaumstoffe und Hartschaumstoffe hergestellt werden, bei denen neben der sehr guten Mechanik speziell die hervorragende Alterungsbeständigkeit in Gegenwart von Feuchte und Temperatur sowie die Lichtbeständigkeit der Schäume sie vom Stand der Technik abheben.

Die Erfindung soll an nachstehenden Beispielen näher erläutert werden.

Es wurden die in Tabelle 1 aufgeführten Polyacrylatpolyole verwendet.

**Tabelle 1:**

| Polyacrylatpolyole | | | | |
|---|---|---|---|---|
| Polyacrylat Nr. | Zusammensetzung Monomere (Mol.-%) | Zahlenmittlere Molmasse (Mₙ, g/mol) | Polydispersität (M_{w}/Mₙ) | OH-Zahl (mg KOH/g) |
| 1 | HEMA / BA 75 : 25 | 1719 | 1,63 | 299 |
| 2 | HEA / BA 25 : 75 | 1889 | 4,79 | 121 |
| 3 | HEA / BA 50 : 50 | 1751 | 2,15 | 241 |
| 4 | HEA / BA 50 : 50 | 2160 | 2,22 | 241 |
| 5 | HEA / BA / HDDA 50 : 47 : 3 | 1476 | 4,46 | 241 |
| 6 | HEA / EHA / HDDA 50 : 47 : 3 | 1289 | 2,52 | 241 |
| HEMA: 2-Hydroxyethylmethacrylat | | | | |
| BA: n-Butylacrylat | | | | |
| HEA: 2-Hydroxyethylacrylat | | | | |
| HDDA: Hexandioldiacrylat | | | | |
| EHA: 2-Ethylhexylacrylat | | | | |

### Beispiele 1 bis 7, Weichschaumstoffe

Aus den in Tabelle 2 angegebenen Verbindungen wurde zunächst eine Polyolkomponente hergestellt. 100 Gew.-Teile der Polyolkomponente und die ebenfalls in Tabelle 2 angegebene Menge an Gew. Teilen der Isocyanatkomponente wurden getrennt voneinander auf 60°C erwärmt, bei dieser Temperatur zusammengegeben, mit einem Rührer homogenisiert und in eine auf 60°C erwärmte, nach oben offene Form mit den Abmessungen 40 x 40 x 40 cm gegeben. Der entstandene Schaum wurde anschliessend bei Raumtemperatur (23°C) über 24 h ausgehärtet.

Die Kenndaten der Schaumstoffe sind in Tabelle 3 festgehalten.

**Tabelle 2:**

| Komponenten zur Herstellung der erfindungsgemäßen Schaumstoffe in Gew. Teilen | | | | | | | |
|---|---|---|---|---|---|---|---|
| Beispiel | 1 | 2 | 3 | 4 | 5 | 6 | 7 |
| Polyolkomponente | | | | | | | |
| Lupranol® 2043 | 32,0 | 28,5 | 25,5 | 31,0 | 23,2 | 27,7 | 17,2 |
| Lupranol® 2090 | 55,0 | 55,0 | 55,0 | 55,0 | 55,0 | 55,0 | 55,0 |
| Pluriol® E 400 | 5,0 | 5,0 | 5,0 | 5,0 | 5,0 | 5,0 | 10,0 |
| Glycerin | 1,0 | 3,0 | 2,0 | 1,0 | 2,0 | 1,0 | 2,0 |
| 1,4-Butandiol | - | - | - | - | 0,5 | 2,0 | 0,5 |
| Ethanolamin | - | - | - | - | - | 1,0 | - |
| Polyacrylat (Nr.) aus Tab. 1, Gew.-Teile | (1) 5,0 | (2) 5,0 | (2) 10,0 | (3) 5,0 | (5) 10,0 | (6) 5,0 | (3) 10,0 |
| DBTL | 0,5 | 1,0 | 1,0 | 0,5 | 0,3 | 0,3 | 0,3 |
| Wasser | 1,5 | 2,5 | 1,5 | 2,5 | 4,0 | 3,0 | 5,0 |

| Polyisocyanatkomponente | | | | | | | |
|---|---|---|---|---|---|---|---|
| Basonat® P LR 8926 | 77,4 | 46,0 | 68,7 | 87,3 | 135,3 | 53,6 | 164,0 |
| Basonat® HI 100 | - | 46,0 | - | - | - | 53,6 | - |
| Schaumtyp | Weichschaum, elastisch | Weichschaum, elastisch | Weichschaum, elastisch | Weichschaum, elastisch | Weichschaum, viskoelastisch | Weichschaum, viskoelastisch | Weichschaum, viskoelastisch |

**Tabelle 3:**

| Kenndaten der Weichschaumstoffe | | | | | | | |
|---|---|---|---|---|---|---|---|
| Beispiel | 1 | 2 | 3 | 4 | 5 | 6 | 7 |
| Dichte (kg/m³) (nach DIN EN ISO 845) | 135,9 | 75,1 | 131,1 | 68,2 | 51,0 | 70,0 | 40,0 |
| Zugfestigkeit (kPa) (nach DIN 53571) | 44,7 | 72,5 | 35,6 | 33,1 | 62,9 | 69,2 | 55,0 |
| Dehnung (%) (nach DIN 53571) | 90 | 82 | 76 | 112 | 118 | 88 | 126 |
| Stauchhärte (kPa) bei 40 % (nach DIN EN ISO 3386) | 7,66 | 5,69 | 6,37 | 2,24 | n.b. | 5,13 | n.b. |
| Druckverformungsrest, 70°C, 50 % Stauchung, 22 h Belastung (%) (nach DIN 53572) | 0 | 0,1 | 0 | 0,5 | 0,2 | 0 | 0,7 |

### Beispiel 8, Vergleichsversuch:

### aliphatischer Weichschaumstoff ohne Zusatz eines Polyacrylats

| Beispiel (Vergleich) | 8 |
|---|---|
| Polyolkomponente | |
| Lupranol® 2043 | 31,0 |
| Lupranol® 2090 | 55,0 |
| Pluriol® E 400 | 5,0 |
| Glycerin | 1,0 |
| 1,4-Butandiol | - |
| Ethanolamin | - |
| Polyacrylat (Nr.) aus Tab. 1, Gew.-Teile | - |
| DBTL | 2,0 |
| Wasser | 2,5 |

| Polyisocyanatkomponente | |
|---|---|
| Basonat® P LR 8926 | 81,6 |
| Basonat® HI 100 | - |

Die Zusammensetzung des Vergleichsbeispiels 8 entsprach der des erfindungsgemäßen Beispiels 4, jedoch wurde hier kein Acrylat eingesetzt. Das fehlende Acrylat führte zu einer deutlichen Verzögerung der Reaktion, daher musste die DBTL-Katalyse angepasst werden. Der resultierende Schaum war sehr weich und klebte lange nach. Nach 12 h Lagerung wies der Schaum einen extremen Schrumpf auf, so daß keine mechanischen Untersuchungen durchgeführt werden konnten.

### Beispiele 9 bis 11, Integralschaumstoffe, Beispiel 12 Hartschaumstoff

Aus den in Tabelle 4 angegebenen Verbindungen wurde zunächst eine Polyolkomponente hergestellt. 100 Gew.-Teile dieser Polyolkomponente und die ebenfalls in Tabelle 4 angegebene Menge an Gew. Teilen Isocyanatkomponente wurden getrennt voneinander auf 60°C erwärmt, bei dieser Temperatur zusammengegeben und mit einem Rührer homogenisiert. Die Integralschaumrezepturen wurden in eine auf 60°C erwärmte, geschlossene Form mit den Abmessungen 20 x 20 x 4 cm gegeben. Der entstandene Integralschaum wurde anschließend bei Raumtemperatur (23°C) ausgehärtet.

Die Hartschaumrezeptur wurde in eine ungeheizte, nach oben offene Form mit den Abmessungen 40 x 40 x 40 cm gegeben. Der entstandene Hartschaum wurde anschliessend bei Raumtemperatur (23°C) ausgehärtet.

**Tabelle 4:**

| Komponenten zur Herstellung von erfindungsgemäßen Integralschaumstoffen in Gew. Teile | | | | |
|---|---|---|---|---|
| Schaum Nr. | 9 | 10 | 11 | 12 |
| Polyolkomponente | | | | |
| Lupranol 2043 | 28,2 | 28,0 | 30,4 | - |
| Lupranol 2090 | 55,0 | 55,0 | 55,0 | - |
| Lupranol 2042 | - | - | - | 72,2 |
| Pluriol E 400 | 5,0 | 5,0 | 5,0 | 5,0 |
| Glycerin | 1,0 | 1,0 | - | - |
| 1,4-Butandiol | - | - | 2,0 | - |
| TMP | - | - | 2,0 | - |
| Ethylenglykol | - | - | - | 10,0 |
| Polyacrylat (Nr.) aus Tab.1, Gew.-Teile | (3) 10,0 | (3) 10,0 | (4) 5,0 | (3) 10,0 |
| DBTL | 0,3 | 0,5 | 0,3 | 0,3 |
| Wasser | 0,5 | 0,5 | 0,3 | 2,5 |

| Polyisocyanatkomponente | | | | |
|---|---|---|---|---|
| Basonat P LR 8926 | 19,5 | 19,5 | 21,5 | - |
| Basonat HI 100 | - | - | 21,5 | 135,4 |
| Schaumtyp | Integralschaum | Integralschaum | Integralschaum | Hartschaum |
| Raumgewicht (kg/m³) | 530 | 353 | 504 | 122 |

### Definition der Einsatzstoffe:

- Basonat® HI 100:: Polyisocyanat aus Hexamethylendiisocyanat (HDI), NCO-Gehalt = 22,0 Gew.-%
- Basonat® P LR 8926:: Polyisocyanat aus HDI, NCO-Gehalt = 19,0 Gew.-%
- Lupranol® 2090:: Polyoxypropylen-polyoxyethylentriol, Hydroxylzahl 28 mg KOH/g
- Lupranol® 2043:: Polyoxypropylen-polyoxyethylendiol, Hydroxylzahl 29 mg KOH/g
- Lupranol® 2042:: Polyoxypropylen-polyoxyethylentriol, Hydroxylzahl 27 mg KOH/g
- Pluriol® E 400:: Polyoxyethylendiol, Hydroxylzahl 280 mg KOH/g
- TMP:: Trimethylolpropan
- DBTL:: Dibutylzinn-dilaurat
- ®:: Eingetragenes Warenzeichen der BASF Aktiengesellschaft

## Patentansprüche

1. Verfahren zur Herstellung von Polyurethan-Schaumstoffen durch Umsetzung von
a) Polyisocyanaten mit
b) Verbindungen mit mindestens zwei mit Isocyanatgruppen reaktiven Wasserstoffatomen,
**dadurch gekennzeichnet, daß** die Polyisocyanate a) aliphatische Di- oder Polyisocyanate sind und die Verbindungen mit mindestens zwei mit Isocyanatgruppen reaktiven Wasserstoffatomen b) mindestens ein Acrylatpolyol, hergestellt durch Polymerisation von hydroxyfunktionalisierten (Meth)acrylaten, enthalten.

2. Verfahren nach Anspruch 1, **dadurch gekennzeichnet, daß** die Acrylatpolyole ein Molekulargewicht Mn von maximal 12000 g/mol aufweisen.

3. Verfahren nach Anspruch 1, **dadurch gekennzeichnet, daß** die Acrylatpolyole durch Copolymerisation von hydroxyfunktionalisierten (Meth)acrylaten mit nicht hydroxylfunktionellen aliphatischen, olefinische Doppelbindungen enthaltenden Monomeren hergestellt werden.

4. Verfahren nach Anspruch 1, **dadurch gekennzeichnet, daß** die Acrylatpolyole durch Copolymerisation von hydroxyfunktionalisierten (Meth)acrylaten mit Ethen, Propen, Buten, Isobuten, Acrylnitril, Acrylamid, Acrolein, Vinylester von Carbonsäuren oder ungesättigten Carbonsäuren, wie zum Beispiel Maleinsäure, Fumarsäure oder Crotonsäure oder deren Derivaten, hergestellt werden.

5. Verfahren nach Anspruch 1, **dadurch gekennzeichnet, daß** die Acrylatpolyole durch Copolymerisation von hydroxyfunktionalisierten (Meth)acrylaten mit nicht hydroxylfunktionellen (Meth)acrylaten hergestellt werden.

6. Verfahren nach Anspruch 1, **dadurch gekennzeichnet, daß** die Acrylatpolyole durch Polymerisation von C₁- bis C₈-Hydroxyalkyl(meth)acrylaten hergestellt werden.

7. Verfahren nach Anspruch 1, **dadurch gekennzeichnet, daß** die Acrylatpolyole durch Copolymerisation von C₁- bis C₈-Hydroxyalkyl(meth)acrylaten mit Alkyl(meth)acrylaten mit C₁- bis C₁₀-Alkylgruppen hergestellt werden.

8. Verfahren nach Anspruch 1, **dadurch gekennzeichnet, daß** die Verbindungen mit mindestens zwei mit Isocyanatgruppen reaktiven Wasserstoffatomen b) mindestens ein Acrylatpolyol und mindestens einen Polyetheralkohol oder Polyesteralkohol enthalten.

9. Verfahren nach Anspruch 1, **dadurch gekennzeichnet, daß** die Acrylatpolyole in einer Menge von 0,1 bis 50 Gew.-Teilen, bezogen auf 100 Gew.-Teile der Verbindungen mit mindestens zwei mit Isocyanatgruppen reaktiven Wasserstoffatomen b), eingesetzt werden.

10. Verfahren nach Anspruch 1, **dadurch gekennzeichnet, daß** als Polyisocyanate a) Hexamethylendiisocyanat-1,6, Isophorondiisocyanat, Bis(4-isocyanatocyclohexyl)methan oder Gemische der genannten Isocyanate eingesetzt werden.

11. Verfahren nach Anspruch 1, **dadurch gekennzeichnet, daß** die Polyisocyanate a) durch Einbau von Urethan-, Allophanat-, Harnstoff-, Biuret-, Uretdion-, Amid-, Isocyanurat-, Carbodiimid-, Uretonimin-, Oxadiazintrion- oder Iminooxadiazindion-Strukturen modifiziert wurden.

12. Polyurethan-Schaumstoff, herstellbar nach einem der Ansprüche 1 bis 11.

## Claims

1. A process for the preparation of polyurethane foams by reacting
a) polyisocyanates with
b) compounds having at least two hydrogen atoms reactive with isocyanate groups,
wherein the polyisocyanates a) are aliphatic di- or polyisocyanates and the compounds having at least two hydrogen atoms reactive with isocyanate groups b) comprise at least one acrylate polyol, prepared by polymerization of hydroxy-functionalized (meth)acrylates.

2. A process as claimed in claim 1, wherein the acrylate polyols have a molecular weight Mn of not more than 12 000 g/mol.

3. A process as claimed in claim 1, wherein the acrylate polyols are prepared by copolymerization of hydroxy-functionalized (meth)acrylates with aliphatic monomers having no hydroxyl functional groups and comprising olefinic double bonds.

4. A process as claimed in claim 1, wherein the acrylate polyols are prepared by copolymerization of hydroxy-functionalized (meth)acrylates with ethene, propene, butene, isobutene, acrylonitrile, acrylamide, acrolein, vinyl esters of carboxylic acids or unsaturated carboxylic acids, for example maleic acid, fumaric acid or crotonic acid or derivatives thereof.

5. A process as claimed in claim 1, wherein the acrylate polyols are prepared by copolymerization of hydroxy-functionalized (meth)acrylates with (meth)acrylates having no hydroxyl functional groups.

6. A process as claimed in claim 1, wherein the acrylate polyols are prepared by polymerization of hydroxy-C₁- to C₈-alkyl (meth)acrylates.

7. A process as claimed in claim 1, wherein the acrylate polyols are prepared by copolymerization of hydroxy-C₁- to C₈-alkyl (meth)acrylates with alkyl (meth)acrylates having C₁- to C₁₀-alkyl groups.

8. A process as claimed in claim 1, wherein the compounds having at least two hydrogen atoms reactive with isocyanate groups b) comprise at least one acrylate polyol and at least one polyether alcohol or polyester alcohol.

9. A process as claimed in claim 1, wherein the acrylate polyols are used in an amount of from 0.1 to 50 parts by weight, based on 100 parts by weight of the compounds having at least two hydrogen atoms reactive with isocyanate groups b).

10. A process as claimed in claim 1, wherein the polyisocyanates a) used are hexamethylene 1,6-diisocyanate, isophorone diisocyanate, bis(4-isocyanatocyclohexyl)methane or mixtures of said isocyanates.

11. A process as claimed in claim 1, wherein the polyisocyanates a) were modified by incorporation of urethane, allophanate, urea, biuret, uretdione, amide, isocyanurate, carbodiimide, uretonimine, oxadiazinetrione or iminooxadiazinedione structures.

12. A polyurethane foam which can be prepared as claimed in any of claims 1 to 11.

## Revendications

1. Procédé de préparation de mousses de polyuréthanne par réaction
a) de polyisocyanates, avec
b) des composés comportant au moins deux atomes d'hydrogène réactifs avec des groupes isocyanate,
**caractérisé en ce que** les polyisocyanates a) sont des diisocyanates ou polyisocyanates aliphatiques et les composés comportant au moins deux atomes d'hydrogène réactifs avec des groupes isocyanate b) contiennent au moins un polyol acrylique, préparé par polymérisation de (méth)acrylates hydroxy-fonctionnalisés.

2. Procédé suivant la revendication 1, **caractérisé en ce que** les polyols acryliques présentent un poids moléculaire Mn de 12.000 g/mole au maximum.

3. Procédé suivant la revendication 1, **caractérisé en ce que** les polyols acryliques sont préparés par copolymérisation de (méth)acrylates hydroxy-fonctionnalisés avec des monomères sans fonctions hydroxy, aliphatiques, contenant des doubles liaisons oléfiniques.

4. Procédé suivant la revendication 1, **caractérisé en ce que** les polyols acryliques sont préparés par copolymérisation de (méth)acrylates hydroxy-fonctionnalisés avec de l'éthène, du propène, du butène, de l'isobutène, de l'acrylonitrile, de l'acrylamide, de l'acroléine, un ester vinylique d'acides carboxyliques ou d'acides carboxyliques insaturés, comme par exemple de l'acide maléique, de l'acide fumarique ou de l'acide crotonique, ou leurs dérivés.

5. Procédé suivant la revendication 1, **caractérisé en ce que** les polyols acryliques sont préparés par copolymérisation de (méth)acrylates hydroxy-fonctionnalisés avec des (méth)acrylates sans fonctions hydroxy.

6. Procédé suivant la revendication 1, **caractérisé en ce que** les polyols acryliques sont préparés par polymérisation de (méth)acrylates d'hydroxyalkyle en C₁-C₈.

7. Procédé suivant la revendication 1, **caractérisé en ce que** les polyols acryliques sont préparés par copolymérisation de (méth)acrylates d'hydroxyalkyle en C₁-C₈ avec des (méth)acrylates d'alkyle comportant des groupes alkyle en C₁-C₁₀.

8. Procédé suivant la revendication 1, **caractérisé en ce que** les composés comportant au moins deux atomes d'hydrogène réactifs avec des groupes isocyanate b) contiennent au moins un polyol acrylique et au moins un polyétheralcool ou polyesteralcool.

9. Procédé suivant la revendication 1, **caractérisé en ce que** les polyols acryliques sont mis en oeuvre en une quantité de 0,1 à 50 parties en poids, par rapport à 100 parties en poids des composés comportant au moins deux atomes d'hydrogène réactifs avec des groupes isocyanate b).

10. Procédé suivant la revendication 1, **caractérisé en ce que**, comme polyisocyanates a), on met en oeuvre du diisocyanate-1,6 d'hexaméthylène, du diisocyanate d'isophorone, du bis (4-isocyanatocyclohexyl)méthane ou des mélanges des isocyanates cités.

11. Procédé suivant la revendication 1, **caractérisé en ce que** les polyisocyanates a) sont modifiés par incorporation de structures uréthanne, allophanate, urée, biuret, uretdione, amide, isocyanurate, carbodiimide, urétonimine, oxadiazinetrione ou iminooxadiazinedione.

12. Mousses de polyuréthanne, que l'on peut préparer suivant l'une des revendications 1 à 11.
